# EUROPÄISCHE PATENTSCHRIFT

(11) **EP 4 423 471 B1**
(45) Veröffentlichungstag und Bekanntmachung des Hinweises auf die Patenterteilung: **03.09.2025**
(21) Anmeldenummer: 22797028.2
(22) Anmeldetag: 22.09.2022
(51) Int. Cl.: G01L 19/06

(54) **DRUCKMITTLER UND DRUCKMESSAUFNEHMER MIT EINEM SOLCHEN DRUCKMITTLER**
DIAPHRAGM SEAL AND PRESSURE MEASURING DEVICE HAVING SUCH A DIAPHRAGM SEAL
JOINT À MEMBRANE ET DISPOSITIF DE MESURE DE PRESSION POURVU D'UN TEL JOINT À MEMBRANE

(30) Priorität: 26.10.2021 DE 102021127844
(43) Veröffentlichungstag der Anmeldung: 04.09.2024
(73) Patentinhaber: Endress+Hauser SE+Co. KG, 79689 Maulburg (DE)
(72) Erfinder: LEUTHNER, Dietmar, 79576 Weil am Rhein (DE); KROPF, Stefan, 79692 Kleines Wiesental (DE); BÖCKLER, Jens, 79539 Lörrach (DE); BERGER, Markus, 79664 Wehr (DE); SCHLACHTER, Marc Andreas, 79664 Wehr (DE)
(74) Vertreter: Endress + Hauser Group Services (Deutschland) AG+Co. KG
(86) Internationale Anmeldenummer: PCT/EP2022/076346
(87) Internationale Veröffentlichungsnummer: WO 2023/072488

(56) Entgegenhaltungen:
- DE-A1- 102011 075 441
- DE-A1- 102020 110 728
- DE-C1- 19 744 208

## Beschreibung

Die vorliegende Erfindung betrifft einen Druckmittler einen Druckmessaufnehmer mit einem solchen Druckmittler. Gattungsgemäße Druckmittler zum Übermitteln eines Drucks umfassen einen metallischen Druckmittlerkörper eine Trennmembran mit einer ersten Seite und einer zweiten Seite, welche der ersten Seite abgewandt ist, wobei die erste Seite der Trennmembran mit einem zu übermittelnden Druck beaufschlagbar ist; eine Trennmembrankammer, welche mittels der Trennmembran verschlossen ist, wobei die zweite Seite der Trennmembran der Trennmembrankammer zugewandt ist, um die Trennmembrankammer mit dem zu übermittelnden Druck zu beaufschlagen; einen Hydraulikkanal der mit der Trennmembrankammer kommuniziert, um den in der Trennmembrankammer herrschenden Druck zu übertragen, wobei der Hydraulikkanal und die Trennmembrankammer mit einer Übertragungsflüssigkeit befüllt sind, wobei der Hydraulikkanal zumindest abschnittsweise durch den Druckmittlerkörper verläuft, einen Befüllkanal in dem Druckmittlerkörper, der mit dem Hydraulikkanal kommuniziert; und einen Verschlusskörper, welcher den Befüllkanal verschließt, wobei der Verschlusskörper in Passung, insbesondere Übergangspassung oder Presspassung in den Befüllkanal eingebracht und mit dem Druckmittlerkörper verschweißt ist. Die Patentschrift DE 197 44 208 C1 offenbart einen solchen Druckmittler. Die Patentschrift DE 10 2020 110 728 A1 offenbart ebenfalls einen Druckmittler. Es hat sich gezeigt, dass hohe Temperaturen, wie sie beim Verschweißen des Verschlusskörpers auftreten können, es für die Langzeitstabilität der Übertragungsflüssigkeit erforderlich ist, dass diese beim Verschweissen des Verschlusskörpers keiner überhöhten Temperatur ausgesetzt ist. Es ist daher die Aufgabe der vorliegenden Erfindung, einen Druckmittler und einen Druckmessaufnehmer mit einem solchen Druckmittler bereitzustellen, dessen Fertigung überhöhte Temperaturen der Übertragungsflüssigkeit zuverlässig vermeidet. Die Aufgabe wird erfindungsgemäß durch den Druckmittler gemäß dem unabhängigen Patentanspruch 1 und den Druckmessaufnehmer gemäß dem unabhängigen Patentanspruch 14.

Die Erfindung bildet den gattungsgemäßen Druckmittler dadurch weiter, dass der der Druckmittlerkörper einen ersten Werkstoff mit einem ersten Härtegrad aufweist, und der Verschlusskörper einen zweiten Werkstoff mit einem zweiten Härtegrad aufweist, der sich von dem ersten Härtegrad um mindestens 10% des geringeren der beiden Härtegrade unterscheidet. Der erste Werkstoff und der zweite Werkstoff können dabei auch den gleichen Grundwerkstoff aufweisen, wobei einer der Werkstoffe einen abweichenden Behandlungszustand aufweist. Beispielsweise durch Kolsterisieren zum Erzielen einer höheren Härte, oder durch Glühen zum Erzielen einer geringeren Härte.

Die Härtegrade werden gemäß einer Weiterbildung der Erfindung in Brinell-Härten (HB) angegeben. Durch die unterschiedlichen Härtegrade lässt sich eine definierte Verformung eines der Partner der Presspassung erzielen, wodurch der Verschlusskörper so weit unter Verdrängung der Übertragungsflüssigkeit in den Befüllkanal eingebracht werden kann, dass eine Überhitzung der Übertragungsflüssigkeit beim anschließenden Verschweißen des Verschlusskörpers vermeidbar ist.

In einer Weiterbildung der Erfindung ist der zweite Härtegrad größer als der erste Härtegrad. Auf diese Weise ist ein noch definierteres Einpressen des Verschlusskörprs möglich.

In einer Weiterbildung der Erfindung umfasst der erste Werkstoff einen austenitischen Stahl, insbesondere 1.4404 wobei der zweite Werkstoff einen martensitischen Stahl umfasst, insbesondere 1.4418.

In einer Weiterbildung der Erfindung beträgt der zweite Härtegrad 266-325 HB, und der erste Härtegrad beträgt 149-208 HB.

In einer Weiterbildung der Erfindung ist der Verschlusskörper, mittels Punktschweißen, insbesondere Impulsschweißen mit dem Druckmittlerkörper verschweißt.

Durch die gewählten Schweißverfahren kann der Energieeintrag sehr schnell erfolgen, was den Wärmeabfluss zur Übertragungsabfluss zur Übertragungsflüssigkeit hinreichend limitiert, um deren Überhitzung zu verhindern.

In einer Weiterbildung der Erfindung ist das Punktschweißen, insbesondere Impulsschweißen mit einer maximalen Leistung von nicht mehr als 2 kW insbesondere nicht mehr als 1,5 kW erfolgt.

In einer Weiterbildung der Erfindung betrug der der maximale Energieeintrag während des Schweißens nicht mehr als 2,5 kJ, insbesondere nicht mehr als 1,8 kJ.

In einer Weiterbildung der Erfindung ist mittels des Punktschweißens bzw. Impulsschweißens eine Schweißtiefe von nicht weniger als 0,35 mm erreicht.

In einer Weiterbildung der Erfindung weist der Verschlusskörper einen im Wesentlichen zylindrischen Abschnitt auf, über den sich die Presspassung erstreckt, wobei die Länge des zylindrischen Abschnitts nicht mehr als 5 mm insbesondere nicht mehr als 4 mm und bevorzugt nicht mehr als 3,5 mm beträgt. Die Länge des zylindrischen Abschnitts beträgt gemäß einer Weiterbildung der Erfindung nicht weniger als 2 mm, insbesondere nicht weniger als 2,5 mm.

Die Länge des zylindrischen Abschnitts bezeichnet die Distanz von einem vorderen Ende des zylindrischen Abschnitts, bis zu einem rückseitigen Ende des zylindrischen Abschnitts, wobei das rückseitige Ende des zylindrischen Abschnitts, durch das Verschweißen mit dem Druckmittlerkörper verschmolzen sein kann. In diesem Fall ist die Stärke des verschweißten Bereiches in axialer Richtung des zylindrischen Abschnitts am Umfang des zylindrischen Abschnitts der Länge des zylindrischen Abschnitts zuzurechnen.

In einer Weiterbildung der Erfindung weist der Verschlusskörper im Bereich der Presspassung einen Durchmesser von nicht mehr als 3,0 mm, insbesondere nicht mehr als 2,6 mm und bevorzugt nicht mehr als 2,1 mm auf.

In einer Weiterbildung der Erfindung weist der Verschlusskörper einen durch die Presspassung begrenzten Oberflächenbereich auf, welcher mit der Übertragungsflüssigkeit benetzt ist, wobei eine maximale Temperatur in dem Oberflächenbereich beim Verschweißen des Verschlusskörpers unterhalb einer Zersetzungstemperatur der Übertragungsflüssigkeit geblieben ist, so dass die Übertragungsflüssigkeit frei von thermischen Zersetzungsprodukten ist.

Die Übertragungsflüssigkeit kann beispielsweise Silikonöle, Pflanzenöle, Glycole, PropylenGlycol und Polyalphaolefine umfassen.

Auf den konkreten Temperaturwert, welcher von der verwendeten Übertragungsflüssigkeit abhängt, kommt es vorliegend nicht an. Solange die Übertragungsflüssigkeit frei von Zersetzungsprodukten ist, kann daraus geschlossen werden, dass die Zersetzungstemperatur nicht erreicht wurde.

In einer Weiterbildung der Erfindung weist der Verschlusskörper einen durch die Presspassung begrenzten Oberflächenbereich auf, welcher mit der Übertragungsflüssigkeit benetzt ist, wobei eine maximale Temperatur in dem Oberflächenbereich beim Verschweißen des Verschlusskörpers nicht mehr als 200°C betrug.

In einer Weiterbildung der Erfindung weist der Druckmittlerkörper eine Kontur auf, die insbesondere durch eine Vertiefung gebildet ist, welche die Fügestelle des Verschlusskörpers konzentrisch umgibt. Diese Kontur ermöglicht die Zentrierung eines Werkzeugs bezüglich des Verschlusskörpers, wobei das Werkzeug insbesondere eine Schweißelektrode umfasst.

Ein erfindungsgemäßer Druckmittler kann eine eigenständige Komponente zur Druckübertragung sein, oder er kann in einen Druckmessaufnehmer zur Messung von Absolutdruck, Relativdruck oder Differenzdruck integriert sein.

Ein erfindungsgemäßer Druckmessaufnehmer umfasst mindestens einen Druckmittler nach einem der vorhergehenden Ansprüche; und einen Druckmesswandler, welcher über den Hydraulikkanal mit einem zu messenden Druck beaufschlagbar ist.

Die Erfindung wird nun anhand der in den Zeichnungen dargestellten Ausführungsbeispiele näher erläutert. Es zeigt:
Fig. 1a: eine schematische Darstellung eines Ausführungsbeispiels eines erfindungsgemäßen Druckmittlers;
Fig. 1b: eine schematische Darstellung eines Ausführungsbeispiels eines erfindungsgemäßen Druckmessaufnehmers mit einem zweiten Ausführungsbeispiel eines erfindungsgemäßen Druckmittlers;
Fig. 1c: eine schematische Darstellung eines zweiten Ausführungsbeispiels eines erfindungsgemäßen Druckmessaufnehmers mit einem dritten Ausführungsbeispiel eines erfindungsgemäßen Druckmittlers;
Fig. 1d: eine schematische Darstellung eines dritten Ausführungsbeispiels eines erfindungsgemäßen Druckmessaufnehmers mit einem vierten Ausführungsbeispiel eines erfindungsgemäßen Druckmittlers;
Fig. 2: eine Prinzipskizze eines verschlossenen Befüllkanal eines Ausführungsbeispiels eines erfindungsgemäßen Druckmittlers;

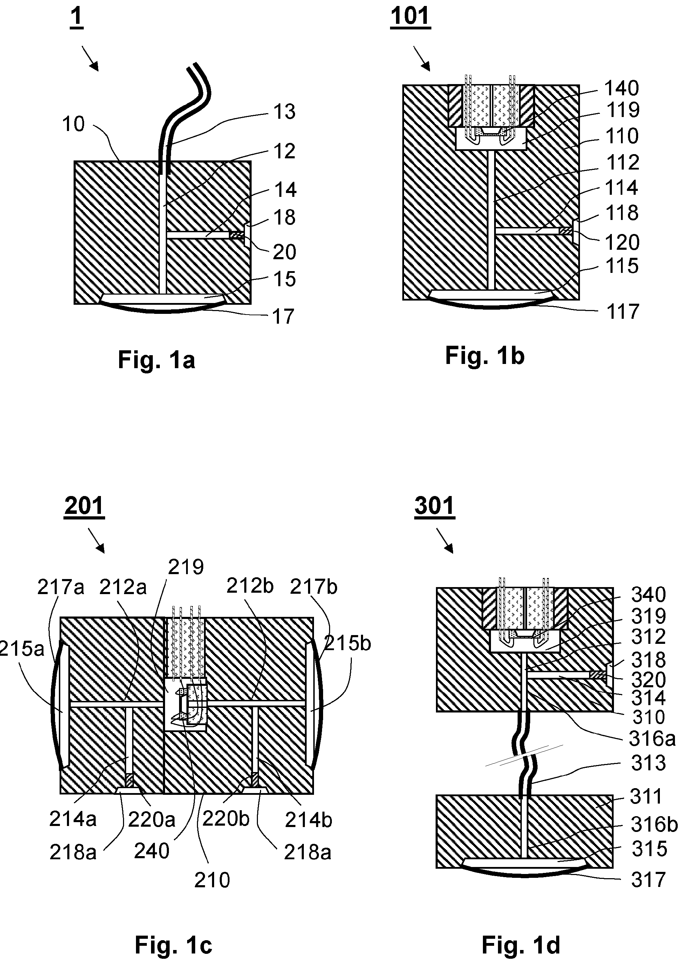

Die in den Fign. 1a, 1b, 1c und 1d gezeigten Ausführungsbeispiele 1; 101; 201; 301 betreffen Druckmittler als eigenständige Komponente bzw. Druckmessaufnehme mit integrierten Druckmittlern. Zum erleichterten Verständnis weisen in dieser Folge von Zeichnungen einander entsprechend Elemente Bezugszeichen mit den gleichen zwei Stellen auf.

Das Ausführungsbeispiel eines Druckmittlers 1 gemäß Fig. 1a umfasst einen im Wesentlichen abschnittsweise zylindrischen metallischen Druckmittlerkörper 10, durch den sich in axialer Richtung eine Bohrung erstreckt, die einen Abschnitt eines Hydraulikkanals 12 bildet. Der Druckmittler 1 weist weiterhin eine hier nur schematisch dargestellte, metallische Trennmembran 17 auf, welche stirnseitig mit einer umlaufenden Fügestelle an dem Druckmittlerkörper 10 befestigt ist, wodurch zwischen dem Druckmittlerkörper 10 und der Trennmembran 17 eine Trennmembrankammer 15 gebildet ist, in welche der Hydraulikkanal 12 mündet. Die Trennmembran weist beispielsweise einen Edelstahl in einer Materialstärke von einigen 10 µm bis 200 µm bei einem Durchmesser von einigen wenigen cm auf. Zudem weist die Trennmembran eine hier nicht dargestellte, geprägte Kontur auf, um ihren Volumenhub zu vergrößern. Der Druckmittler 1 weist weiterhin eine Kapillarleitung 13 auf, welche auf der der Trennmembran 17 abgewandten Stirnseite des Druckmittlerkörpers 10 an die axiale Bohrung angeschlossen ist, um einen weiteren Abschnitt des Hydraulikkanals 12 zu bilden. Zur Befüllung des Druckmittlers 1, insbesondere des Hydraulikkanals 12 und der Trennmembrankammer 15 mit einer Übertragungsflüssigkeit weist der Druckmittlerkörper 10 einen Befüllkanal 14 auf, der sich von einer Mantelfläche des Druckmittlerkörpers 10 zum Hydraulikkanal erstreckt. Zur Befüllung können der Hydraulikkanal und die Trennmembranmkammer über den Befüllkanal evakuiert werden, um dann über den Befüllkanal eine Übertragungsflüssigkeit, beispielsweise ein Silikonöl einströmen zu lassen. Der Befüllkanal 14 ist mit einem Verschlusskörper 20 verschlossen, der nach dem Befüllen in Presspassung in den Befüllkanal 24 eingebracht und mit dem Druckmittlerkörper mittels Impulsschweißen verschweißt ist.

Ein erstes Ausführungsbeispiel eines erfindungsgemäßen Druckmessaufnehmers 101 mit integriertem Druckmittler gemäß Fig. 1b umfasst einen im Wesentlichen zylindrischen metallischen Druckmittlerkörper 110, in den sich in axialer Richtung eine Bohrung zu einer Sensorkammer 119 erstreckt, wobei die Bohrung eine Hydraulikkanal 112 bildet. Der Druckmittler weist weiterhin eine hier nur schematisch dargestellte, metallische Trennmembran 117 auf, welche stirnseitig mit einer umlaufenden Fügestelle an dem Druckmittlerkörper 110 befestigt ist, wodurch zwischen dem Druckmittlerkörper 110 und der Trennmembran 117 eine Trennmembrankammer 115 gebildet ist, in welche der Hydraulikkanal 112 mündet. Die Trennmembran weist beispielsweise einen Edelstahl in einer Materialstärke von einigen 10 µm bis 200 µm bei einem Durchmesser von einigen wenigen cm auf. Zudem weist die Trennmembran eine hier nicht dargestellte, geprägte Kontur auf, um ihren Volumenhub zu vergrößern. Der Druckmessaufnehmer 101 weist weiterhin einen Druckmesswandler 140 auf, hier einen piezoresistiven Halbleiterdruckmesswandler, welcher von der der Trennmembran 117 abgewandten Stirnseite des Druckmittlerkörpers 110 in die Sensorkammer 119 eingesetzt ist. Zur Befüllung des Druckmittlers 101, insbesondere des Hydraulikkanals 12 der Sensorkammer 119 und der Trennmembrankammer 15 mit einer Übertragungsflüssigkeit weist der Druckmittlerkörper 110 einen Befüllkanal 114 auf, der sich von einer Mantelfläche des Druckmittlerkörpers 110 zum Hydraulikkanal 112 erstreckt. Zur Befüllung können der Hydraulikkanal 112, die Sensorkammer 119 und die Trennmembranmkammer 115 über den Befüllkanal evakuiert werden, um dann über den Befüllkanal eine Übertragungsflüssigkeit, beispielsweise ein Silikonöl einströmen zu lassen. Der Befüllkanal 114 ist mit einem Verschlusskörper 120 verschlossen, der nach dem Befüllen in Presspassung in den Befüllkanal 124 eingebracht und mit dem Druckmittlerkörper mittels Impulsschweißen verschweißt ist.

Ein zweites Ausführungsbeispiel eines erfindungsgemäßen Druckmessaufnehmers 201 zum Messen von Druckdifferenzen gemäß Fig. 1c umfasst zwei Druckmittler in einen im Wesentlichen zylindrischen metallischen Druckmittlerkörper 210, in den sich von beiden Stirnseiten in axialer Richtung jeweils eine Bohrung zu einer Sensorkammer 219 erstreckt, wobei die Bohrungen jeweils eine Hydraulikkanal 212a, 212b bilden. Die beiden Druckmittler weisen weiterhin jeweils eine hier nur schematisch dargestellte, metallische Trennmembran 217a, 217b auf, welche jeweils stirnseitig mit einer umlaufenden Fügestelle an dem Druckmittlerkörper 210 befestigt sind, wodurch zwischen dem Druckmittlerkörper 210 und den Trennmembranen 217a, 217b jeweils eine Trennmembrankammer 215a, 215b gebildet ist, in welche jeweils einer der Hydraulikkanäle 212a, 212b mündet. Die Trennmembranen 217a,217b weisen jeweils beispielsweise einen Edelstahl in einer Materialstärke von einigen 10 µm bis 200 µm bei einem Durchmesser von einigen wenigen cm auf. Zudem weisen die Trennmembran eine hier nicht dargestellte, geprägte Kontur auf, um ihren Volumenhub zu vergrößern. Der Druckmessaufnehmer 201 weist weiterhin einen Druckmesswandler 240 auf, hier einen piezoresistiven Halbleiterdruckmesswandler, welcher in die Sensorkammer 219 eingesetzt, und über die Hydraulikkanäle 212a, 212b von entgegengesetzten Seiten jeweils mit den in der auf dieser Seite befindlichen Trennmembrankammer 215a, 215 b herrschenden Druck beaufschlagt zu werden, wozu der Druckmesswandler 240 die Sensorkammer 219 in zwei Teile trennt die jeweils mit einem der Hydraulikkanäle kommunizieren. Zur Befüllung der Druckmittler, insbesondere der Hydraulikkanäl2 212a, 212b, der Sensorkammer 219 und der Trennmembrankammern 215a, 215b mit einer Übertragungsflüssigkeit weist der Druckmittlerkörper 210 zwei Befüllkanäle 214a, 214b auf, die sich jeweils von einer Mantelfläche des Druckmittlerkörpers 210 zu einem der Hydraulikkanäle 212a, 212b erstrecken. Zur Befüllung können die Hydraulikkanäle 212a, 212b, die Sensorkammer 219 und die Trennmembranmkammern 215a, 215b über die Befüllkanäle 214a, 214b evakuiert werden, um dann jeweils über die Befüllkanäle eine Übertragungsflüssigkeit, beispielsweise ein Silikonöl einströmen zu lassen. Die Befüllkanal 214a, 214b sind jeweils mit einem Verschlusskörper 220a, 220b verschlossen, der jeweils nach dem Befüllen in Presspassung in einen der Befüllkanäle 214a, 214b eingebracht und mit dem Druckmittlerkörper mittels Impulsschweißen verschweißt ist.

Ein drittes Ausführungsbeispiel eines erfindungsgemäßen Druckmessaufnehmers 301 mit integriertem Druckmittler gemäß Fig. 1d umfasst einen im Wesentlichen zylindrischen metallischen Druckmittlerkörper 310, in den sich in axialer Richtung eine Bohrung 316a zu einer Sensorkammer 319 im Druckmittlerkörper 310 erstreckt, wobei die Bohrung einen Abschnitt eines Hydraulikkanals 312 bildet. Der Druckmessaufnehmer 301 weist weiterhin einen im Wesentlichen zylindrischen metallischen Trennmembrankammerkörper 311 auf, durch den sich eine axiale Bohrung 316b erstreckt, die mit der Bohrung 316a in axialer Richtung durch den Druckmittlerkörper 310 über eine Kapillarleitung 313 hydraulisch verbunden ist, um einen Hydraulikkanal 312 zu bilden.

Der Druckmessaufnehmer 301 weist weiterhin eine hier nur schematisch dargestellte, metallische Trennmembran 317 auf, welche stirnseitig mit einer umlaufenden Fügestelle an dem Trennmembrankammerkörper 311 befestigt ist, wodurch zwischen dem Trennmembrankammerkörper 311 und der Trennmembran 317 eine Trennmembrankammer 315 gebildet ist, in welche der Hydraulikkanal 312 mündet. Die Trennmembran weist beispielsweise einen Edelstahl in einer Materialstärke von einigen 30 µm bis 200 µm bei einem Durchmesser von einigen wenigen cm auf. Zudem weist die Trennmembran eine hier nicht dargestellte, geprägte Kontur auf, um ihren Volumenhub zu vergrößern. Der Druckmessaufnehmer 301 weist weiterhin einen Druckmesswandler 340 auf, hier einen piezoresistiven Halbleiterdruckmesswandler, welcher von der der Kapillarleitung 313 abgewandten Stirnseite des Druckmittlerkörpers 310 in die Sensorkammer 319 eingesetzt ist. Zur Befüllung des Druckmittlers 301, insbesondere des Hydraulikkanals 312 der Sensorkammer 319 und der Trennmembrankammer 35 mit einer Übertragungsflüssigkeit weist der Druckmittlerkörper 310 einen Befüllkanal 314 auf, der sich von einer Mantelfläche des Druckmittlerkörpers 310 zum Hydraulikkanal 312 erstreckt. Zur Befüllung können der Hydraulikkanal 312, die Sensorkammer 319 und die Trennmembranmkammer 315 über den Befüllkanal evakuiert werden, um dann über den Befüllkanal eine Übertragungsflüssigkeit, beispielsweise ein Silikonöl einströmen zu lassen. Der Befüllkanal 314 ist mit einem Verschlusskörper 320 verschlossen, der nach dem Befüllen in Presspassung in den Befüllkanal 324 eingebracht und mit dem Druckmittlerkörper mittels Impulsschweißen verschweißt ist.

In allen Ausführungsbeispielen weisen die Druckmittlerköroer 10; 110; 210; 310 um die Verschlusskörper 20; 120; 210a, 220b; 320 eine Kontur 18; 118; 210a, 218b; 318 auf, die insbesondere durch eine Vertiefung gebildet ist und zur Positionierung eines Werkzeugs dient, insbesondere zur Positionierung eine Schweißelektrode beim Verschließen des Befüllkanals.

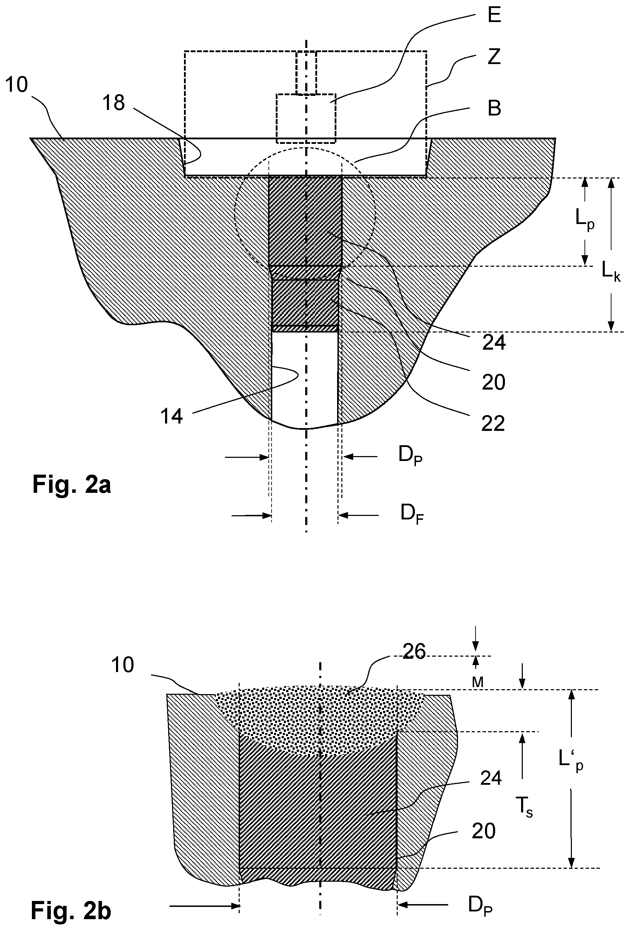

Einzelheiten zum Verschließen des Befüllkanals werden nun anhand der Fign. 2a und 2b erläutert, wobei die verwendeten Bezugszeichen dem Ausführungsbeispiel gemäß Fig. 1a entsprechen. Die folgenden Erläuterungen gelten aber für alle Ausführungsbeispiele der Erfindung. Der Befüllkanal 14 erstreckt sich von einer Oberfläche des Druckmittlerkörpers 10 in dessen Inneres, wobei der Druckmittlerkörper 10 in der Umgebung des Befüllkanals eine Kontur 18 aufweist, welche durch den Rand einer Vertiefung in der Oberfläche des Druckmittlerkörpers gebildet ist, und welche die Öffnung des Befüllkanal 18 insbesondere koaxial umgibt. Der Befüllkanal weist einen Durchmesser D_{F} auf, der einige wenige mm betragen kann, beispielsweise nicht mehr als 2,5 mm. In den Befüllkanal 14 ist nach dem Befüllen des Druckmittlers mit Übertragungsflüssigkeit ein abschnittsweise zylindrischer, metallischer Verschlusskörper 10 eingebracht, welcher eine Länge L_{K} von nicht mehr als 10 mm beispielsweise etwa 6 mm aufweist. Der Verschlusskörper 20 mit einer Gesamtlänge L_{K} weist einen zylindrischen Führungsabschnitt 22 dessen Durchmesser nicht größer als der Durchmesser D_{F} des Befüllkanals 14 ist, und insbesondere gleich dem Durchmesser D_{F} des Befüllkanals 14 ist, so dass der Führungsabschnitt einfach, insbesondere in Spielpassung in den Befüllkanal eingesetzt werden kann. Der Verschlusskörper weist weiterhin einen rückseitigen Pressabschnitt 24 auf, dessen Durchmesser D_{P} größer ist als der Durchmesser D_{F} des Befüllkanals. Bei einem Durchmesser D_{F} des Befüllkanals von 2,00 mm kann der Durchmesser D_{P} des Pressabschnitts 24 beispielsweise 2,05 mm betragen. Insofern kann der Pressabschnitt 24 nur in Presspassung in den Befüllkanal 24 eingebracht werden. Hierbei wird sämtliche Übertragungsflüssigkeit, die nach dem Befüllen noch an der Wand des Befüllkanals 24 verblieben ist im Bereich der Presspassung zuverlässig verdrängt, jedoch ist nicht auszuschließen, dass im Bereich des Führungsabschnitts 22, noch Übertragungsflüssigkeit an den Wänden des Befüllkanals bzw. der Mantelfläche des Verschlusskörpers 20 vorhanden ist. Um die Übertragungsflüssigkeit zu schützen, darf dort beim Verschweißen des Verschlusskörpers ihre Zersetzungstemperatur nicht erreicht werden. Hierzu kann einerseits die Länge L_{P} des Pressabschnitts 24 möglichst groß gehalten werden, wobei diesem Parameter Grenzen gesetzt sind, denn erstens nimmt der Energieaufwand zum Verpressen des Verschlusskörpers mit der Länge der Presspassung zu, und zweitens steigt damit die Länge des Befüllkanals und der gesamte Materialbedarf für den Druckmittler. Andererseits kann der Energieeintrag beim Verschweißen optimiert werden. Vorliegend werden beide Ansatzpunkte ausgenutzt.

Durch die Verwendung von Stählen mit unterschiedlichen Härten für den Druckmittlerkörper 10 und den Verschlusskörper 20 erfolgt das Verpressen des Verschlusskörpers mit einer definierten Verformung der weniger harten Komponente. Damit lässt sich reproduzierbar eine ausreichende Länge L_{P} der Presspassung erreichen. Vorliegend weist der Verschlusskörper eine 20 einen martensitischen Stahl, insbesondere 1.4418 auf, welcher härter ist als ein austenitischer Stahl, insbesondere 1.4404, der für den Druckmittlerkörper 10 verwendet wird.

Weiterhin erfolgt das Verschweißen des Verschlusskörpers 20 mit dem Druckmittlerkörper 10 durch Punktschweißen, insbesondere Impulsschweißen mit einem einzigen kurzen Energieeintrag, der ein Aufschmelzen der Fügepartner für die erforderliche Schweißtiefe Ts von beispielsweise 0,35 mm für einen drucktragenden Verschluss bewirkt, bevor zu viel Energie durch Wärmeleitung abgeflossen ist. Die Leistung beim Schweißen in der Schweißstrecke beträgt dabei beispielsweise etwa 600 W bei einem Leistungseintrag von etwa 2,5 s.

Um eine gute Reproduzierbarkeit im Herstellungsprozess zu gewährleisten ist eine präzise Zentrierung und Beabstandung einer Schweißelektrode bezüglich des eingepressten Verschlusskörpers 14 erforderlich. Dazu dient eine in Fig. 2a angedeutete keramische, rotationssymmetrische Zentriervorrichtung Z, die mit ihrer Mantelfläche an der Kontur 18 anliegt und die Schweißelektrode in einem definierten Abstand von etwa 1,5 mm positioniert. Das Ergebnis des Verschweißens ist in Fig. 2b gezeigt, welches einen in Fig. 2a mit B gekennzeichneten Bereich nach dem Schweißvorgang vergrößert schematisch dargestellt. Darin ist zu erkennen, dass Material des Verschlusskörpers 20 und des Druckmittlerkörpers 10 in einem Bereich 26, welcher an die rückseitige Stirnfläche des Verschlusskörpers 26 angrenzt, miteinander verschmolzen ist.
Hierdurch sind der Verschlusskörper 20 und der Druckmittlerkörper 10 mit einer Schweißtiefe Ts miteinander drucktragend verbunden, wobei die Schweißtiefe die schwächste Verbindung zwischen den Fügepartnern bezeichnet, die am Durchmesser D_{P} des Pressabschnitts 24 zu messen ist. Eine nachträgliche Messung der Länge L_{P} des Pressabschnitts 24, beispielsweise in einem Schnittbild, erweist sich insofern als schwierig, als der rückseitige Bereich des Pressabschnitt 24 mit Material des Druckmittlerkörpers 10 verschmolzen ist, und das erstarrte Material ggf. einen Meniskus aufweist. Am Durchmesser D_{P} des Pressbereichs wird also eine um die Stärke M des Meniskus veränderte, finale Länge L'_{P} des Pressbereichs gemessen. Anhand der Gestalt des Meniskus und des Werts der finalen Länge L'_{P} des Pressabschnitts lässt sich jedoch die Länge L_{P} des Pressabschnitts 24 bestimmen, welche den Abstand der Übertragungsflüssigkeit von der Rückseite des Verschlusskörpers 10 zu Beginn des Schweißprozesses und damit gewissermaßen einen thermischen Sicherheitsabstand für die Übertragungsflüssigkeit definiert. Die Länge L_{P} des Pressabschnitts beträgt mindestens 1,5 mm, nicht mehr als 5 mm und beispielsweise 3 mm. Damit wird in Kombination mit dem beschriebenen Schweißverfahren eine thermische Zersetzung der Übertragungsflüssigkeit beim Verschließen des Druckmittlers zuverlässig verhindert.

## Patentansprüche

1. Druckmittler (1) zum hydraulischen Übermitteln eines Drucks, umfassend:
einen metallischen Druckmittlerkörper (10);
eine Trennmembran (17) mit einer ersten Seite und einer zweiten Seite, welche der ersten Seite abgewandt ist, wobei die erste Seite der Trennmembran (17) mit einem zu übermittelnden Druck beaufschlagbar ist;
eine Trennmembrankammer (15), welche mittels der Trennmembran (17) verschlossen ist, wobei die zweite Seite der Trennmembran (17) der Trennmembrankammer (15) zugewandt ist, um die Trennmembrankammer (15) mit dem zu übermittelnden Druck zu beaufschlagen;
einen Hydraulikkanal (12), der mit der Trennmembrankammer (15) kommuniziert, um den in der Trennmembrankammer (15) herrschenden Druck zu übertragen, wobei der Hydraulikkanal (12) und die Trennmembrankammer (15) mit einer Übertragungsflüssigkeit befüllt sind, wobei der Hydraulikkanal (12) zumindest abschnittsweise durch den Druckmittlerkörper (10) verläuft,
einen Befüllkanal (14) in dem Druckmittlerkörper (10), der mit dem Hydraulikkanal (12) kommuniziert;
und
einen Verschlusskörper (20), welcher den Befüllkanal (14) verschließt, wobei der Verschlusskörper (20) in Passung, insbesondere Übergangspassung oder Presspassung, in den Befüllkanal (14) eingebracht und mit dem Druckmittlerkörper (10) verschweißt ist;
**dadurch gekennzeichnet, dass**
der Druckmittlerkörper (10) einen ersten Werkstoff mit einem ersten Härtegrad aufweist, und der Verschlusskörper (20) einen zweiten Werkstoff mit einem zweiten Härtegrad aufweist, der sich von dem ersten Härtegrad um mindestens 10% des geringeren der beiden Härtegrade unterscheidet.

2. Druckmittler (1) nach Anspruch 1, wobei der zweite Härtegrad größer ist als der erste Härtegrad.

3. Druckmittler (1) nach Anspruch 1 oder 2, wobei der erste Werkstoff einen austenitischen Stahl, insbesondere 1.4404 umfasst, und wobei der zweite Werkstoff einen martensitischen Stahl, insbesondere 1.4418 umfasst.

4. Druckmittler (1) nach Anspruch 1, 2 oder 3, wobei der zweite Härtegrad 266-325 HB beträgt und der erste Härtegrad 149-208 HB beträgt.

5. Druckmittler (1) nach einem der vorhergehenden Ansprüche, wobei der Verschlusskörper (20) mittels Punktschweißen, insbesondere Impulsschweißen, mit dem Druckmittlerkörper (10) verschweißt ist.

6. Druckmittler (1) nach Anspruch 5, wobei das Punktschweißen, insbesondere Impulsschweißen mit einer maximalen Leistung von nicht mehr als 2 kW insbesondere nicht mehr als 1,5 kW erfolgt ist.

7. Druckmittler (1) nach Anspruch 5 oder 6, wobei der Energieeintrag während des Schweißens nicht mehr als 2,5 kJ, insbesondere nicht mehr als 1,8 kJ beträgt.

8. Druckmittler (1) nach einem der Ansprüche 5 bis 7, wobei mittels des Punktschweißens , insb. mittels des Impulsschweißens, eine Schweißtiefe von nicht weniger als 0,35 mm erreicht ist.

9. Druckmittler (1) nach einem der vorhergehenden Ansprüche, wobei der Verschlusskörper (20) einen im Wesentlichen zylindrischen Abschnitt aufweist, über den sich die Presspassung erstreckt, wobei die Länge des zylindrischen Abschnitts nicht mehr als 5 mm insbesondere nicht mehr als 4 mm und bevorzugt nicht mehr als 3,5 mm beträgt.

10. Druckmittler (1) nach einem der vorhergehenden Ansprüche, wobei der Verschlusskörper (20) im Bereich der Presspassung einen Durchmesser von nicht mehr als 3,0 mm, insbesondere nicht mehr als 2,6 mm und bevorzugt nicht mehr als 2,1 mm aufweist.

11. Druckmittler (1) nach einem der vorhergehenden Ansprüche, wobei der Verschlusskörper (20) einen durch die Presspassung begrenzten Oberflächenbereich aufweist, welcher mit der Übertragungsflüssigkeit benetzt ist, wobei eine maximale Temperatur in dem Oberflächenbereich beim Verschweißen des Verschlusskörpers (20) unterhalb einer Zersetzungstemperatur der Übertragungsflüssigkeit geblieben ist, so dass die Übertragungsflüssigkeit frei von thermischen Zersetzungsprodukten ist.

12. Druckmittler (1) nach einem der vorhergehenden Ansprüche, wobei der Verschlusskörper (20) einen durch die Presspassung begrenzten Oberflächenbereich aufweist, welcher mit der Übertragungsflüssigkeit benetzt ist, wobei eine maximale Temperatur in dem Oberflächenbereich beim Verschweißen des Verschlusskörpers (20) nicht mehr als 200°C beträgt.

13. Druckmittler (1) nach einem der vorhergehenden Ansprüche, wobei der Druckmittlerkörper (10) eine Kontur (18), insbesondere eine Vertiefung aufweist, welche die Fügestelle des Verschlusskörpers (20) konzentrisch umgibt.

14. Druckmessaufnehmer, umfassend mindestens einen Druckmittler (1) nach einem der vorhergehenden Ansprüche; und einen Druckmesswandler (40), welcher über den Hydraulikkanal (12) mit einem zu messenden Druck beaufschlagbar ist.

## Claims

1. A diaphragm seal (1) for hydraulically transferring a pressure, comprising:
A metal diaphragm seal body (10);
a separating membrane (17) with a first side and a second side, which faces away from the first side, wherein a pressure to be transferred can be applied to the first side of the separating membrane (17);
a separating membrane chamber (15) which is sealed by the separating membrane (17), wherein the second side of the separating membrane (17) faces toward the separating membrane chamber (15) so that the pressure to be transferred is applied to the separating membrane chamber (15);
a hydraulic duct (12) which communicates with the separating membrane chamber (15) in order to transfer the pressure present in the separating membrane chamber (15), wherein the hydraulic duct (12) and the separating membrane chamber (15) are filled with a transfer fluid, wherein at least sections of the hydraulic duct (12) run through the diaphragm seal body (10),
a filling duct (14) in the diaphragm seal body (10) which communicates with the hydraulic duct (12);
and
a sealing body (20) which seals off the filling duct (14), wherein the sealing body (20) is inserted into a fit, in particular a transition fit or press fit, in the filling duct (14) and is welded to the diaphragm seal body (10);
**characterized in that**
the diaphragm seal body (10) has a first material with a first degree of hardness, and the sealing body (20) has a second material with a second degree of hardness, which differs from the first degree of hardness by at least 10% of the lower of the two degrees of hardness.

2. The diaphragm seal (1) as claimed in claim 1, wherein the second degree of hardness is greater than the first degree of hardness.

3. The diaphragm seal (1) as claimed in claim 1 or 2, wherein the first material comprises an austenitic steel, in particular 1.4404, and wherein the second material comprises a martensitic steel, in particular 1.4418.

4. The diaphragm seal (1) as claimed in claim 1, 2 or 3, wherein the second degree of hardness is equal to 266-325 HB and the first degree of hardness is equal to 149-208 HB.

5. The diaphragm seal (1) as claimed in one of the preceding claims, wherein the sealing body (20) is welded to the diaphragm seal body (10) by means of spot-welding, in particular pulsed-current welding.

6. The diaphragm seal (1) as claimed in claim 5, wherein spot-welding, in particular pulsed-current welding, is performed with a maximum power not exceeding 2 kW, in particular not exceeding 1.5 kW.

7. The diaphragm seal (1) as claimed in claim 5 or 6, wherein the energy input during welding is not more than 2.5 kJ, in particular not more than 1.8 kJ.

8. The diaphragm seal (1) as claimed in one of claims 5 to 7, wherein a welding depth of not less than 0.35 mm is achieved by means of spot-welding, in particular by means of pulsed-current welding.

9. The diaphragm seal (1) as claimed in one of the preceding claims, wherein the sealing body (20) has a mostly cylindrical section over which the press fit extends, wherein the length of the cylindrical section is not more than 5 mm, in particular not more than 4 mm, and preferably not more than 3.5 mm.

10. The diaphragm seal (1) as claimed in one of the preceding claims, wherein the sealing body (20) has a diameter of not more than 3.0 mm, in particular not more than 2.6 mm, and preferably not more than 2.1 mm, in the area of the press fit.

11. The diaphragm seal (1) as claimed in one of the preceding claims, wherein the sealing body (20) has a surface area limited by the press fit, which is wetted with the transfer fluid, wherein a maximum temperature in the surface area remained below a decomposition temperature of the transfer fluid when welding the sealing body (20) so that the transfer fluid is free from thermal decomposition products.

12. The diaphragm seal (1) as claimed in one of the preceding claims, wherein the sealing body (20) has a surface area limited by the press fit, which is wetted with the transfer fluid, wherein a maximum temperature in the surface area does not exceed 200 °C when welding the sealing body (20).

13. The diaphragm seal (1) as claimed in one of the preceding claims, wherein the diaphragm seal body (10) has a contour (18), in particular a recess, which concentrically surrounds the joint of the sealing body (20).

14. A pressure transducer, comprising at least one diaphragm seal (1) as claimed in one of the preceding claims; and a pressure measuring transducer (40) which can have a pressure to be measured applied to it via the hydraulic duct (12).

## Revendications

1. Séparateur (1) destiné à la transmission hydraulique d'une pression, lequel séparateur comprend :
un corps de séparateur métallique (10) ;
une membrane de séparation (17) avec un premier côté et un deuxième côté qui est opposé au premier côté, le premier côté de la membrane de séparation (17) pouvant être soumis à une pression à transmettre ;
une chambre de membrane de séparation (15), laquelle est fermée au moyen de la membrane de séparation (17), le deuxième côté de la membrane de séparation (17) étant tourné vers la chambre de membrane de séparation (15) pour soumettre la chambre de membrane de séparation (15) à la pression à transmettre ;
un canal hydraulique (12), lequel communique avec la chambre de membrane de séparation (15) pour transmettre la pression régnant dans la chambre de membrane de séparation (15), le canal hydraulique (12) et la chambre de membrane de séparation (15) étant remplis d'un liquide de transmission, le canal hydraulique (12) s'étendant au moins par sections à travers le corps de séparateur (10),
un canal de remplissage (14) dans le corps de séparateur (10), lequel communique avec le canal hydraulique (12) ;
et
un corps de fermeture (20), lequel ferme le canal de remplissage (14), le corps de fermeture (20) étant inséré au moyen d'un ajustement, notamment un ajustement de transition ou un ajustement serré, dans le canal de remplissage (14) et étant soudé au corps de séparateur (10) ;
**caractérisé en ce que**
le corps de séparateur (10) présente un premier matériau avec un premier degré de dureté, et le corps de fermeture (20) présente un deuxième matériau avec un deuxième degré de dureté qui se différencie du premier degré de dureté d'au moins 10 % du plus petit des deux degrés de dureté.

2. Séparateur (1) selon la revendication 1, pour lequel le deuxième degré de dureté est supérieur au premier degré de dureté.

3. Séparateur (1) selon la revendication 1 ou 2,
pour lequel le premier matériau comprend un acier austénitique, notamment 1.4404, et
pour lequel le deuxième matériau comprend un acier martensitique, notamment 1.4418.

4. Séparateur (1) selon la revendication 1, 2 ou 3, pour lequel le deuxième degré de dureté est de 266-325 HB et le premier degré de dureté est de 149-208 HB.

5. Séparateur (1) selon l'une des revendications précédentes, pour lequel le corps de fermeture (20) est soudé au corps du séparateur (10) par soudage par points, notamment par soudage pulsé.

6. Séparateur (1) selon la revendication 5, pour lequel le soudage par points, notamment le soudage pulsé, a été effectué avec une puissance maximale ne dépassant pas 2 kW, notamment ne dépassant pas 1,5 kW.

7. Séparateur (1) selon la revendication 5 ou 6, pour lequel l'apport d'énergie pendant le soudage n'est pas supérieur à 2,5 kJ, notamment pas supérieur à 1,8 kJ.

8. Séparateur (1) selon l'une des revendications 5 à 7, pour lequel une profondeur de soudage non inférieure à 0,35 mm est atteinte au moyen du soudage par points, notamment au moyen du soudage pulsé.

9. Séparateur (1) selon l'une des revendications précédentes, pour lequel le corps de fermeture (20) présente une section sensiblement cylindrique sur laquelle s'étend l'ajustement serré, la longueur de la section cylindrique n'étant pas supérieure à 5 mm, notamment pas supérieure à 4 mm et de préférence pas supérieure à 3,5 mm.

10. Séparateur (1) selon l'une des revendications précédentes, pour lequel le corps de fermeture (20) présente, dans la zone de l'ajustement serré, un diamètre qui n'est pas supérieur à 3,0 mm, notamment pas supérieur à 2,6 mm et de préférence pas supérieur à 2,1 mm.

11. Séparateur (1) selon l'une des revendications précédentes, pour lequel le corps de fermeture (20) présente une zone de surface délimitée par l'ajustement serré, laquelle zone est mouillée par le liquide de transmission, une température maximale dans la zone de surface lors du soudage du corps de fermeture (20) étant restée inférieure à une température de décomposition du liquide de transmission, de sorte que le liquide de transmission est exempt de produits de décomposition thermique.

12. Séparateur (1) selon l'une des revendications précédentes, pour lequel le corps de fermeture (20) présente une zone de surface délimitée par l'ajustement serré, laquelle zone est mouillée par le liquide de transmission, une température maximale dans la zone de surface lors du soudage du corps de fermeture (20) n'étant pas supérieure à 200 °C.

13. Séparateur (1) selon l'une des revendications précédentes, pour lequel le corps du séparateur (10) présente un contour (18), notamment un creux, lequel contour entoure de manière concentrique le point d'assemblage du corps de fermeture (20).

14. Transmetteur de pression, lequel comprend au moins un séparateur (1) selon l'une des revendications précédentes ; et un transducteur de pression (40), lequel peut être soumis à une pression à mesurer via le canal hydraulique (12).
